# EUROPÄISCHE PATENTSCHRIFT

(11) **EP 2 528 460 B1**
(45) Veröffentlichungstag und Bekanntmachung des Hinweises auf die Patenterteilung: **04.12.2013**
(21) Anmeldenummer: 11702596.5
(22) Anmeldetag: 27.01.2011
(51) Int. Cl.: A23L 3/32, A23L 2/50, A23L 3/26

(54) **VORRICHTUNG UND VERFAHREN ZUR HOCHSPANNUNGSIMPULSBEHANDLUNG IM RINGSPALT**
DEVICE AND METHOD FOR PULSED ELECTRIC FIELD TREATMENT IN AN ANNULAR SPACE
DISPOSITIF ET METHODE POUR LE TRAITEMENT A CHAMP ELECTRIQUE PULSE DANS UNE FENTE ANNULAIRE

(30) Priorität: 27.01.2010 DE 102010001279
(43) Veröffentlichungstag der Anmeldung: 05.12.2012
(60) Teilanmeldung: 13168864.0
(73) Patentinhaber: Deutsches Institut für Lebensmitteltechnik e.V., 49610 Quakenbrück (DE)
(72) Erfinder: GROSSE KOHORST, Werner, 49413 Dinklage (DE); ROHE, Thomas, 49632 Essen i.O. (DE)
(74) Vertreter: Taruttis, Stefan Georg
(86) Internationale Anmeldenummer: PCT/EP2011/051149
(87) Internationale Veröffentlichungsnummer: WO 2011/092247

(56) Entgegenhaltungen:
- EP-A1- 2 052 743
- EP-A2- 1 198 997
- WO-A1-97/04858
- DE-A1-102007 039 115
- US-A- 5 690 978
- US-A1- 2004 238 348

## Beschreibung

Die Erfindung betrifft Vorrichtung und Verfahren zur Behandlung von flüssigen bzw. pumpbaren Medien, insbesondere von Flüssigkeiten mit einem gepulsten elektrischen Feld, insbesondere zur kontinuierlichen Behandlung von Flüssigkeiten, die vorzugsweise Nahrungsmittel sind. Pumpbare Medien, die mit dem erfindungsgemäßen Verfahren behandelt werden können, können stückige Bestandteile aufweisen, da diese mit dem Verfahren ebenfalls aufgeschlossen werden, bzw. deren Keimgehalt ebenfalls reduziert wird. Das gepulste elektrische Feld wird zwischen Elektroden erzeugt, entlang derer die Flüssigkeit geführt wird, sodass bei Strömung der Flüssigkeit durch das elektrische Feld eine kontinuierliche Behandlung erreicht wird.

Neben der Vorrichtung mit einer Elektrodenanordnung stellt die Erfindung die Verwendung der Vorrichtung als Einrichtung zur Hochspannungsimpulsbehandlung von pumpbaren Medien bereit, sowie ein Verfahren zur Hochspannungsimpulsbehandlung von pumpbaren Medien mittels der Vorrichtung, deren Elektroden an die Hochspannungsimpulsquelle angeschlossen sind, insbesondere zur Hochspannungsimpulsbehandlung von Nahrungsmitteln. Die erfindungsgemäße Vorrichtung und das erfindungsgemäße Verfahren eignen sich insbesondere zum Aufbringen starker elektrischer Felder bei kurzer Dauer, beispielsweise durch Beaufschlagung der Elektroden in der Vorrichtung mit Impulsleistungen von ca. 3-10 MW, insbesondere 5 MW, bei einer Impulsdauer von 10-30 µs, insbesondere 20 µs, bei einer Zeit von 3.000-5.000 µs zwischen den Impulsen, insbesondere mit einen Impulsabstand von ca. 4.000 µs, bzw. bei einer mittleren Leistung von ca. 15-50 kW, insbesondere ca. 25 kW.

Die Hochspannungsimpulsbehandlung, auch Elektroporation genannt, findet unter anderem Verwendung zur Entkeimung und/oder zum Zellaufschluss bei Lebensmitteln, Medikamenten, Abwässern, Substraten und Futtermitteln, da diese Behandlung bei biologischen Zellen zur Perforation der Zellwand führt, und daher zumindest zum teilweisen Aufschluss und/oder zur Verringerung der Keimbelastung bzw. zur Entkeimung. Die besondere Elektrodengestalt der erfindungsgemäßen Vorrichtung erlaubt wegen der Gleichmäßigkeit des erzeugten elektrischen Feldes ein gleichmäßiges Behandlungsverfahren und bevorzugt ein Verfahren mit geringem Energieaufwand für das elektrische Feld, insbesondere im Vergleich zu bekannten Elektrodenanordnungen. Für den Aufschluss bzw. die Entkeimung von pumpbaren Lebensmitteln sind z.B. Feldstärken von 15-20 kV/cm geeignet.

### Stand der Technik

Die DE 60933273 T2 zeigt eine Vorrichtung zu Hochspannungsimpulsbehandlung, bei der eine erste rohrförmige Elektrode um eine beabstandete koaxiale zweite Elektrode angeordnet ist, sodass die Elektroden zwischen sich einen Strömungskanal mit ringförmigem Querschnitt bilden.

Die EP 1123662 B1 beschreibt eine Vorrichtung zu Hochspannungsimpulsbehandlung, bei der die Elektroden in einer Behandlungskammer so angeordnet sein sollen, dass die Feldlinien des erzeugten elektrischen Feldes parallel zueinander verlaufen und die Potenzialsteuerung so konzipiert sein soll, dass Stärke und Richtung des elektrischen Feldes in der effektiven Strömungsfläche konstant sind. Die Behandlungskammer kann ein rechteckiges Gehäuse sein, in dem die Elektroden in einem Abstand zueinander parallel angeordnet sind. Alternativ können die Elektroden in der Innenwand eines Rohrs parallel zur Längsachse eingelassen sein.
Bei der koaxialen Anordnung von Elektroden entgegengesetzter Polarität ist das erzeugte elektrische Feld nicht homogen, sodass Bereiche des ringförmigen Zwischenraums zwischen Elektroden nur von einer signifikant verringerten Feldstärke erfasst werden.

Bei kolinearer Anordnung der Elektroden, z.B. wenn beabstandete Abschnitte eines Rohrs als Elektroden ausgestaltet sind und dazwischen ein Isoliermaterial die Rohrwandung bildet, nimmt die elektrische Feldstärke von der Wandung zum Zentrum des Strömungsquerschnitts deutlich ab. Da überdies die Strömungsgeschwindigkeit mit zunehmendem Abstand von der Rohrwandung größer wird, erfolgt insbesondere entlang der Längsmittelachse einer solchen Elektrodenanordnung keine effektive Behandlung des Mediums, während im Bereich der Wandung durch die hohen Feldstärken hohe thermische Belastungen des dort mit geringer Geschwindigkeit strömenden Mediums auftreten. Diese thermische Belastung kann zur Denaturierung bzw. Anhaftung des pumpbaren Mediums im Bereich der Elektrodenanordnung führen.
Die EP 2052743 A1 beschreibt eine Elektrodenanordnung zur Erzeugung eines elektrischen Felds in einem durchströmbaren Rohrabschnitt, wobei jeweils zwei Abschnitte jeder Elektrode zwischen sich Kondensatoren bilden. Die Elektroden sind in einem axialen Rohrabschnitt angebracht, in dem ein Isolierkörper angeordnet ist, der den Querschnitt zu einem ringförmigen Querschnitt begrenzt. Die Elektroden können in einem axialen Abstand auf dem Isolierkörper, in der Rohrwandung oder einander gegenüberliegend in dem Isolierkörper und der Rohrwandung angeordnet sein.
Die US 5690978 beschreibt eine Vorrichtung zur Behandlung von Flüssigkeiten mit gepulsten elektrischen Feldern, die zwei durch Isolatoren beabstandete Elektroden aufweist, die in einem axialen Abschnitt eines Strömungswegs jeweils einen ringförmigen Querschnitt aufspannen, dessen innere und äußere Oberfläche von derselben Elektrode gebildet wird.
Die US 2004/0238348 A1 beschreibt einen in einem Rohrabschnitt gehalterten Körper aus Isoliermaterial, auf dem eine Elektrodenfläche angeordnet ist, während die andere Elektrodenfläche auf der umgebenden Wandung angeordnet ist, um einen ringförmigen Strömungsquerschnitt zu begrenzen. Alternativ können entgegengesetzte Elektroden axial beabstandet auf dem Isolierkörper oder an der Wandung des Rohrs, jeweils angrenzend an dem ringförmigen Strömungsquerschnitt angeordnet sein.
Die EP 1198997 A2 beschreibt eine Vorrichtung zur Behandlung einer Flüssigkeit mittels elektrischer Felder, die axial durch Isoliermaterial beabstandete Elektroden aufweist, die die Wandung eines Strömungskanals begrenzen, in welchem eine Gegenelektrode axial verschieblich geführt ist.

>

### Aufgabe der Erfindung

Es ist Aufgabe der Erfindung, eine alternative Vorrichtung und ein mit der Vorrichtung durchführbares alternatives Verfahren zur Hochspannungsimpulsbehandlung bereitzustellen. Die erfindungsgemäße Vorrichtung und das erfindungsgemäße Verfahren sollen insbesondere die Nachteile des Standes der Technik überwinden.

### Allgemeine Beschreibung der Erfindung

Die Erfindung löst die Aufgabe mit den Merkmalen der Ansprüche. Die Elektroden sind mit entgegengesetzten Polen einer Hochspannungsimpulsquelle kontaktierbar bzw. verbunden, bzw. mit elektrischen Hochspannungsimpulsen entgegengesetzter Polarität beaufschlagbar. Für die Zwecke der Erfindung werden Elektrodenoberflächen von Elektroden bzw. Isolatoroberflächen auch als Elektrodenflächen bzw. Isolatorflächen bezeichnet. Generell bezieht sich die Beschreibung der erfmdungsgemäßen Merkmale sowohl auf die Vorrichtung als auch auf das Verfahren gemäß der Erfindung. Der Querschnitt des Behandlungsraums ist vorzugsweise ein Ringspalt, der insbesondere kreisförmig oder elliptisch sein kann und vorzugsweise über zumindest einen axialen Abschnitt, vorzugsweise in dem axialen Abschnitt, über welchen sich der Isolator zwischen den Elektroden erstreckt, eine konstante bzw. die gleiche Spaltbreite aufweist. Entsprechend können der erste und zweite Radius, die diesen Querschnitt zwischen sich begrenzen, in einem axialen Abschnitt jeweils feste Werte aufweisen und eine kreisförmige Fläche beschreiben, oder jeweils radial unterschiedliche Werte aufweisen und eine elliptische Fläche beschreiben, wobei sich die Werte des ersten und zweiten Radius um den Betrag unterschieden, der die Spaltbreite ist.

Die erfindungsgemäße Vorrichtung zeichnet sich dadurch aus, dass eine erste Elektrodenfläche und eine durch einen zwischenliegenden Isolator davon entlang der Längsachse eines Behandlungsraums beabstandete Elektrodenfläche angrenzend an einen Behandlungsraum für pumpbares Medium angeordnet sind, welcher senkrecht zur Längsachse einen ringförmigen Querschnitt aufweist, bzw. einen Ringspalt bildet. Da Einlass- bzw. Auslassöffnung jeweils an gegenüberliegenden Enden des Behandlungsraums mit ringförmigen Querschnitt angeordnet sind, z.B. angrenzend an ein erstes Ende des stabförmigen Elements bzw. angrenzend an ein entlang der Längsachse gegenüberliegendes zweites Ende des stabförmigen Elements angeordnet ist, wird bei Durchtritt eines pumpbaren Mediums durch den Behandlungsraum mit ringförmigem Querschnitt das pumpbare Medium nacheinander über die Elektrodenflächen gegenüberliegender Polarität geführt, d.h. im Wesentlichen parallel zu dem zwischen den Elektrodenflächen erzeugten elektrischen Feld. Auf diese Weise wird beim erfindungsgemäßen Verfahren mit der Vorrichtung eine gleichmäßige Hochspannungsimpulsbehandlung des pumpbaren Mediums durchgeführt, bei der das pumpbare Medium gleichmäßig dem elektrischen Feld ausgesetzt wird. Durch den erfindungsgemäß bevorzugt ringförmigen Querschnitt des Behandlungsraums, der in einem Abschnitt der Längsachse durch eine erste und eine von dieser axial beabstandete zweite Elektrodenfläche mit einem zwischenliegenden Isolator begrenzt wird, wird pumpbares Medium mit im Wesentlichen gleicher Strömungsgeschwindigkeit strömen gelassen, wobei durch die erfindungsgemäße Elektrodenanordnung ein im Wesentlichen homogenes elektrisches Feld über diesen ringförmigen Querschnitt erzeugt wird.

Erfindungsgemäß ist entlang der Längsmittelachse des Strömungswegs ein stabförmiges Element angeordnet, und die erste und zweite Elektrodenfläche sind in beabstandeten axialen Abschnitten der Vorrichtung angeordnet, über welche sich das stabförmige Element erstreckt, wobei die erste und zweite Elektrodenfläche in einem axialen Abstand angeordnet sind, der parallel zur Längsmittelachse liegt und der von einem Isolator ausgefüllt ist. Dabei sind die erste und zweite Elektrodenfläche von durch den Isolator beabstandeten Elektroden gebildet, die sich insgesamt senkrecht, z.B. plattenförmig mit Durchbrechungen über den Querschnitt der Vorrichtung erstrecken, der größer als der Querschnitt des Behandlungsraums ist. Die erste Elektrodenfläche grenzt an einer ersten Kante an den Isolator, der sie von der zweiten Elektrodenfläche beabstandet, und die zweite Elektrodenfläche grenzt an die der ersten Kante des Isolators gegenüberliegende zweite Kante. An der ersten und zweiten Kante zwischen Elektrodenfläche und Isolator kann eine Dichtung angeordnet sein, vorzugsweise stößt die erste Elektrodenfläche an der ersten Kante unmittelbar an den Isolator, und die zweite Elektrodenfläche stößt an der zweiten Kante unmittelbar an den Isolator.

Oberflächenabschnitte des Abschnitts der Vorrichtung mit ringförmigem Querschnitt, über welchen sich das stabförmige Element längs der Längsmittelachse erstreckt, die an die Elektrodenflächen angrenzen, sind elektrisch nicht leitend bzw. bestehen aus Isolator.

Der Strömungsweg bzw. Behandlungsraum mit ringförmigem Querschnitt kann von einem Rohrabschnitt gebildet werden, der innen den ersten Radius aufweist und von einem in dem Rohrabschnitt angeordneten stabförmigen Element, dessen Mantelfläche im zweiten Radius um die gemeinsame Längsmittelachse angeordnet ist. Vorzugsweise ist das stabförmige Element in jeder Ausführungsform, insbesondere wenn es aus Isolator, z.B. Keramik, besteht, längs der Längsachse von stabförmigem Element bzw. des Rohrabschnitts verschieblich angeordnet, insbesondere in Richtung der Längsachse verschieblich formschlüssig und/oder kraftschlüssig im Isolator fixiert. Der erste und zweite Radius können unabhängig voneinander über die Längsmittelachse konstant sein oder sich verändern. Der axiale Abschnitt der Längsmittelachse, über den sich die erste Elektrodenfläche und die axial beabstandete zweite Elektrodenfläche sowie der zwischen diesen liegende Isolator erstrecken, können unabhängig voneinander gleich oder verschieden sein.

Besonders bevorzugt weist die erfindungsgemäße Vorrichtung eine erste Elektrodenfläche und eine durch einen Isolator axial beabstandete zweite Elektrodenfläche auf, wobei die erste und die zweite Elektrodenfläche sich optional senkrecht zur Längsmittelachse erstrecken und Bohrungen aufweisen, oder jeweils Zylindermantelflächen aufweisen oder daraus bestehen, die in einem Radius um die Längsmittelachse angeordnet sind, wobei das stabförmige Element rotationssymmetrisch um die Längsmittelachse gebildet ist, vorzugsweise mit einer zylindrischen Oberfläche.

Generell können Elektrodenflächen formschlüssig und/oder kraftschlüssig mit angrenzenden Isolatoren verbunden sein. Besonders bevorzugt weisen Elektrodenflächen Metall oder Kohlenstoff, z.B. Graphit auf oder bestehen daraus, vorzugsweise Edelstahl oder Titan. Isolatoren, insbesondere solche, die zwischen ersten und zweiten Elektrodenflächen angeordnet sind, sind vorzugsweise einstückig und bestehen besonders bevorzugt aus Keramik. Wie ein Isolator kann auch ein stabförmiges Element, das keine Elektrodenflächen aufweist, und ein isolierender Abschnitt eines stabförmigen Elements, das eine Elektrodenfläche aufweist, bevorzugt aus Keramik bestehen.

Im erfindungsgemäßen Verfahren wird Medium durch einen Arbeitsraum strömen gelassen bzw. gepumpt, der einen ringförmigen Querschnitt aufweist, wobei durch Hochspannungsimpulsentladung ein elektrisches Feld zwischen einer ersten und einer zweiten Elektrodenfläche erzeugt wird, die axial voneinander beabstandet sind. In dem axialen Abschnitt, um den die erste und zweite Elektrodenfläche beabstandet sind, ist ein Isolator angeordnet.

In einer ersten Ausführungsform sind die erste und zweite Elektrodenfläche jeweils voneinander axial beabstandete ringförmige bzw. umfänglich geschlossene innere Oberflächenabschnitte eines Rohrabschnitts, in welchem ein stabförmiges Element axial angeordnet ist, das elektrisch nicht leitend ist, bzw. aus Isolator besteht. In einer bevorzugten Ausgestaltung dieser Ausführungsform ist in dem axialen Abschnitt, um den die Elektroden beabstandet sind, ein Isolator angeordnet, der in einem axialen Abschnitt mit einem konstanten ersten (äußeren) Radius den Abschnitt des stabförmigen Elements mit konstantem zweitem (inneren) Radius den Behandlungsraum mit ringförmigem Querschnitt begrenzt, sodass der ringförmige Querschnitt konstant ist, wobei zwischen jeder Elektrode und dem Abschnitt mit konstantem ringförmigem Querschnitt ein axialer Bereich angeordnet ist, dessen Querschnitt sich von einer Elektrode zum ringförmigen Querschnitt des Behandlungsraums verjüngt, insbesondere trichterförmig. Die Verjüngung jedes axialen Bereichs zwischen Elektrode und ringförmigen Querschnitt des Behandlungsraums erfolgt vorzugsweise dadurch, dass sich das stabförmige Element in diesem axialen Bereich kegelförmig bzw. kegelstumpfförmig von seinem Abschnitt mit konstantem erstem Radius in Richtung jeder Elektrode verjüngt, insbesondere kegelförmig bzw. kegelstumpfförmig von seinem Abschnitt mit konstantem erstem Radius bis an eine Elektrode angrenzend zuläuft. In dieser Ausgestaltung können der Isolator und das stabförmige Element in dem axialen Abschnitt zwischen Behandlungsraum mit konstantem ringförmigem Querschnitt und jeder Elektrode einen sich trichterförmig auf den Behandlungsraum zulaufenden Querschnitt des Strömungswegs begrenzen, der rotationssymmetrisch um die gemeinsame Längsmittelachse von Isolator und darin angeordnetem stabförmigem Element erstreckt. Für einen konstanten und kleinen ringförmigen Querschnitt des Behandlungsraums, z.B. von 1 bis 5mm, vorzugsweise 1,5 bis 3mm oder bis 2mm, weist der Isolator auf seiner inneren Fläche und/oder das stabförmige Element auf seiner äußeren Fläche jeweils in dem axialen Abschnitt konstanten Durchmessers Abstandshalter auf, die sich über den ringförmigen Querschnitt des Behandlungsraums erstrecken, um eine längs der gemeinsamen Längsachse verschiebliche Halterung des stabförmigen Elements im Isolator zu erlauben. Solche Abstandshalter sind vorzugsweise parallel zur Längsmittelachse des stabförmigen Elements angeordnet, insbesondere zumindest 3 Abstandshalter, die um den Umfang des stabförmigen Elements verteilt sind, insbesondere rotationssymmetrisch.

Erfindungsgemäß weisen die Elektroden Durchbrechungen bzw. Bohrungen auf und erstrecken sich über den großen Querschnitt, der in dem Abstand des axialen, sich verjüngenden, insbesondere trichterförmigen Bereichs zwischen dem ringförmigen Querschnitt des Behandlungsraums, der insbesondere von Isolator und koaxial darin angeordnetem stabförmigem Element aufgespannt ist, und der Elektrodenfläche erstreckt, um eine große Elektrodenfläche zu bilden, die ein Medium kontaktieren kann und die lokale Belastung der Elektroden im Verhältnis zum Querschnitt des Behandlungsraums gering ist. Weiter führt die Verjüngung jedes axialen Bereichs zwischen Elektrode und ringförmigem Querschnitt des Behandlungsraums dazu, dass das elektrische Feld bzw. die Impulsentladung in den ringförmigen Querschnitt konzentriert wird. In weiter bevorzugter Ausführungsform ist der Isolator, der insbesondere den gleichen Außenradius wie die Elektroden aufweist und insbesondere rotationssymmetrisch ist, kraftschlüssig zwischen zwei Elektroden angeordnet, die insbesondere kreisförmig sind, vorzugsweise mit einer Dichtung zwischen jeder Elektrode und dem Isolator. Weiter bevorzugt ist auch das stabförmige Element formschlüssig und/oder kraftschlüssig zwischen zwei Elektroden angeordnet, so dass Isolator und stabförmiges Element kraftschlüssig zwischen zwei beabstandeten Elektroden angeordnet sind, die Bohrungen aufweisen und sich über den Querschnitt erstrecken, der in einem Abstand vom Behandlungsraum mit konstantem ringförmigen Querschnitt zwischen Isolator und stabförmigem Element aufgespannt wird. Dabei ist das stabförmige Element vorzugsweise um seinen Umfang formschlüssig vom inneren Querschnitt des Isolators umfasst, so dass der ringförmige Querschnitt des Behandlungsraums durch den Formschluß von z.B. Vorsprüngen des stabförmigen Elements über dessen zweiten Radius und den um diesen angeordneten ersten Radius des Isolators bestimmt ist; die Längsverschieblichkeit dieser Ausführungsform des stabförmigen Elements wird durch die kraftschlüssige Anordnung zwischen den Elektroden begrenzt. In dieser Ausführungsform sind die Elektroden vorzugsweise plattenförmig mit Bohrungen, durch die Medium strömen kann. Optional können generell Elektroden und ein in einem axialen Abstand zwischen diesen angeordneter Isolator und ein stabförmiges Element, optional mit an die Elektroden anschließenden Rohrstutzen, das bevorzugt innen zylindrisch ist, flüssigkeitsdicht aneinander angeordnet sein, z.B. dadurch, dass die Rohrstutzen mittels elektrisch nicht leitender Spannelemente gegeneinander belastet sind.

Generell kann eine Vorrichtung zwei Elektroden gleicher Polarität aufweisen und in axialem Abstand zwischen diesen eine Elektrode entgegengesetzter Polarität, wobei in jedem Abstand zwischen Elektroden ein Isolator und ein stabförmiges Element angeordnet ist, welches den Querschnitt zu einem ringförmigen Querschnitt begrenzt.

### Genaue Beschreibung der Erfindung

Die Erfindung wird nun genauer anhand von Beispeilen mit Bezug auf die schematische Figur beschrieben.

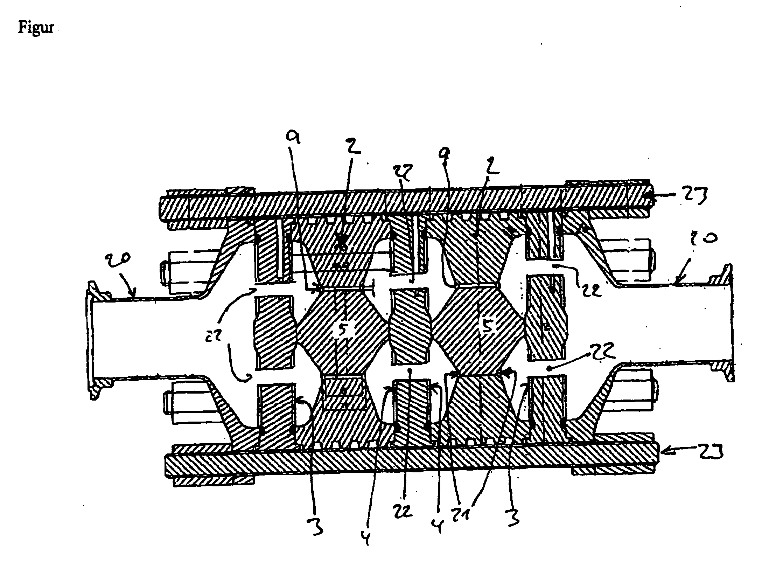

In der Figur bezeichnen gleiche Bezugsziffern funktionsgleiche Elemente. Merkmale, die mit Bezug auf eine Ausführungsform beschrieben sind, können auch auf die anderen Ausführungsformen übertragen werden.

Die in der Figur schematisch gezeigte Ausführungsform und ist vorzugsweise in einem den Rohrabschnitt umgebenden isolierenden Mantel angeordnet.

Die Figur zeigt eine erfindungsgemäße Ausführungsform. Eine erste Elektrode mit erster Elektrodenfläche 3 und eine zweite Elektrode mit zweiter Elektrodenfläche 4 sind in einem axialen Abstand zueinander angeordnet, in welchem ein Isolator 2 angeordnet ist, und in diesem ein stabförmiges Element 5, wobei zwischen dem stabförmigen Element 5 und dem Isolator 2 ein ringförmiger Querschnitt 9 gebildet wird. Gemäß einer generell bevorzugten Ausführungsform sind hier zwei erste Elektrodenflächen 3 gezeigt, zwischen denen jeweils im Abstand eine zweite Elektrode mit zweiten Elektrodenflächen 4 angeordnet ist, wobei im Abstand zu jeder zweiten Elektrodenfläche 4 eine erste Elektrodenfläche 3 angeordnet ist, und in jedem Abstand ein Isolator 2 und ein konzentrisch in diesem angeordnetes stabförmiges Element 5 angeordnet ist, die zwischen sich einen Behandlungsraum mit ringförmigem Querschnitt 9 begrenzen. Der Isolator 2 und das stabförmige Element 5, ebenfalls elektrisch nicht leitend, bestehen vorzugsweise aus demselben Material, insbesondere aus Keramik, besonders bevorzugt aus Aluminiumoxidkeramik. Die Elektroden, auf denen die Elektrodenflächen angeordnet sind, sind im wesentlichen plattenförmig und weisen Bohrungen 22 auf, die die Elektroden durchbrechen und vorzugsweise parallel zur gemeinsamen Längsmittelachse von stabförmigem Element 5 und Isolator 2 angeordnet sind.

Vorzugsweise sind die beiden ersten Elektroden mit ihren ersten Elektrodenflächen 3, zwischen welchen die zweiten Elektrodenflächen 4 angeordnet sind, mit Masse kontaktiert, sodass unmittelbar angrenzend an die Elektroden mit ersten Elektrodenflächen 3 jeweils ein Rohrstutzen 20 angeordnet sein kann, insbesondere aus elektrisch leitfähigem Material, ohne dass elektrische Energie über die zweiten Elektroden mit ihren zweiten Elektrodenflächen 3 über eine angeschlossene Leitung bzw. durch das die Vorrichtung durchströmende Medium weitergeleitet wird. Entsprechend ist die erste Elektrode mit ersten Elektrodenflächen 4 vorzugsweise mit der impulsgebenden Spannung beaufschlagt.

Die Elektroden mit ersten und zweiten Elektrodenflächen 3, 4 erstrecken sich über eine große Querschnittsfläche in einem axialen Abstand zum Behandlungsraum mit ringförmigem Querschnitt 9, wobei dieser Abstand sich trichterförmig dadurch von jeder Elektrodenfläche 3, 4 zum ringförmigen Querschnitt 9 des Behandlungsraums erstreckt, dass in dem axialen Bereich zwischen ringförmigem Querschnitt 9 und Elektrodenfläche 3, 4 der Isolator 2 und das stabförmige Element 5 einen sich von der Elektrodenfläche 3, 4 zum ringförmigen Querschnitt 9 verjüngenden Strömungsweg bilden. Entsprechend der bevorzugten Ausführungsform läuft das stabförmige Element 5 in dem axialen Abschnitt zwischen dem ringförmigem Querschnitt 9 und der beabstandeten Elektrodenfläche 3, 4 kegelstumpfförmig zu, während der Isolator 2 sich in diesem axialen Abschnitt von der beabstandeten Elektrodenfläche 3, 4 zum ringförmigen Querschnitt 9 verjüngt. Wie generell besonders bevorzugt ist in der Figur gezeigt, dass der Isolator 2 und das stabförmige Element 5 an die Elektrodenflächen 3, 4 angrenzen und kraftschlüssig zwischen jeweils einer Elektrode mit erster Elektrodenfläche 3 und einer Elektrode mit zweiter Elektrodenfläche 4 fixiert sind. Da die Elektroden dieser Ausführungsform plattenförmig sein können, können sich Isolator 2 und stabförmiges Element 5 über jeweils den gleichen axialen Abschnitt der Vorrichtung erstrecken und sind vorzugsweise ihrer gemeinsamen Längsmittelachse rotationssymmetrisch.

Der Behandlungsraum mit ringförmigem Querschnitt 9 wird durch Abstandshalter 21 zuverlässig auf einen konstanten Durchmesser eingestellt, die das stabförmige Element 5 in einzelnen Abschnitten überragen, und beispielsweise in Form von Stegen auf dem Abschnitt des stabförmigen Elements 5 angeordnet sind, in welchem das stabförmige Element 5 den ringförmigen Querschnitt 9 begrenzt. Wie bei 21 gezeigt, grenzt ein Abstandshalter 21 des stabförmigen Elements 5 in der Schnittebene an die Oberfläche des Isolators 2, die den ringförmigen Querschnitt 9 begrenzt. Aus dieser Figur ist ersichtlich, dass die Elektrodenflächen 3, 4 im Verhältnis zum Querschnitt des Behandlungsraums mit ringförmigem Querschnitt 9 ein wesentlich größeren Anteil des Querschnitts der Vorrichtung einnehmen, und durch den trichterförmigen Verlauf des Bereichs zwischen Elektrodenfläche 3, 4 bis zum ringförmigen Querschnitt 9 das elektrische Feld auf den ringförmigen Querschnitt 9 konzentriert wird, und daher eine effektive Behandlung des durchströmenden Mediums erlaubt, wobei der konstante ringförmige Querschnitt 9 eine über seinen Querschnitt konstante Strömungsgeschwindigkeit durch den Behandlungsraum in diesem axialen Abschnitt erlaubt, wodurch eine gleichmäßige Behandlung des Mediums erreicht wird. Als Beispiel für eine mögliche Vielzahl von Bohrungen 22, die sich durch die ersten und zweiten Elektroden erstrecken, sind Bohrungen 22 zeigt, wie sich parallel zur Längsmittelachse des Behandlungsraums mit ringförmigem Querschnitt 9 erstrecken.

Spannelemente 23, vorzugsweise aus elektrisch nichtleitendem Material, können die Rohrstutzen 22 gegeneinander belasten, zwischen denen zumindest eine Elektrode mit einer ersten Elektrodenfläche 3, eine axial beabstandete Elektrode mit einer zweiten Elektrodenfläche 4 und ein in diesem Abstand angeordneten Isolator 2 mit konzentrisch angeordnetem stabförmigem Element 5 angeordnet sind, die zwischen sich einen Behandlungsraum mit ringförmigem Querschnitt 9 begrenzen.

**Bezugszeichenliste**

| | | | |
|---|---|---|---|
| 1 | Rohrabschnitt | 9 | ringförmiger Querschnitt |
| 2 | Isolator | 20 | Rohrstutzen |
| 3 | erste Elektrodenfläche | 21 | Abstandshalter |
| 4 | zweite Elektrodenfläche | 22 | Bohrung |
| 5 | stabförmiges Element | 23 | Spannelement |

## Patentansprüche

1. Vorrichtung zur Behandlung eines pumpfähigen Mediums (8) mittels Hochspannungsimpuls, die einen Behandlungsraum mit einem Querschnitt (9) aufweist, der einen ersten Radius um eine Mittellängsachse aufweist, eine erste Elektrodenfläche (3) und eine zweite Elektrodenfläche (4), die von der ersten Elektrodenfläche (3) axial beabstandet ist, wobei in dem axialen Abstand zwischen der ersten Elektrodenfläche (3) und der zweiten Elektrodenfläche (4) ein Isolator (2, 2') angeordnet ist und die erste und zweite Elektrodenfläche (3, 4) mit elektrischer Energie entgegengesetzter Polarität beaufschlagbar sind, wobei in dem Behandlungsraum ein stabförmiges Element (5) angeordnet ist, das den Querschnitt (9) durch seinen zweiten Radius begrenzt, **dadurch gekennzeichnet, dass** die erste Elektrodenfläche (3) und die zweite Elektrodenfläche (4) jeweils um einen axialen Bereich vom Behandlungsraum, der einen durch den ersten und zweiten Radius begrenzten Querschnitt (9) aufweist, beabstandet sind, wobei der Isolator (2, 2') und das stabförmige Element (5), das ein Isolator ist, in diesem axialen Bereich einen Querschnitt aufspannen, der sich von einer Elektrodenfläche (3, 4) zum Behandlungsraum verjüngt und wobei die Elektrodenflächen (3, 4) von Elektroden gebildet sind, die Durchbrechungen (22) aufweisen und sich über einen größeren Querschnitt erstrecken als der Behandlungsraum.

2. Vorrichtung nach Anspruch 1, **dadurch gekennzeichnet, dass** die erste Elektrodenfläche (3, 11) und die zweite Elektrodenfläche (4, 12) jeweils umfänglich um die Längsmittelachse geschlossen sind.

3. Vorrichtung nach Anspruch 1, **dadurch gekennzeichnet, dass** die erste Elektrodenfläche (3, 11) und die zweite Elektrodenfläche (4, 12) im gleichen ersten Radius um die Längsmittelachse angeordnet sind.

4. Vorrichtung nach einem der Ansprüche 1 bis 3 , **dadurch gekennzeichnet, dass** die erste und/oder die zweite Elektrodenfläche (3, 4) durch eine Leitung kontaktiert ist, die durch die Wandung des Rohrabschnitts (1) geführt ist.

5. Vorrichtung nach einem der voranstehenden Ansprüche, **dadurch gekennzeichnet, dass** sich der erste Radius abschnittsweise entlang der Längsmittelachse verändert.

6. Vorrichtung nach einem der voranstehenden Ansprüche, **dadurch gekennzeichnet, dass** sich der zweite Radius abschnittsweise über die Längsmittelachse verändert.

7. Verfahren zur Hochspannungsimpulsbehandlung pumpbarer Medien durch Bewegen eines Mediums entlang der Längsachse eines Behandlungsraums, durch Erzeugen eines elektrischen Feldes zwischen einer ersten Elektrodenfläche (3) und einer von der ersten Elektrodenfläche (3) axial beabstandeten zweiten Elektrodenfläche (4), wobei der Behandlungsraum durch ein stabförmiges Element (5) zu einem ringförmigen Querschnitt (9) begrenzt ist, **dadurch gekennzeichnet, dass** das elektrische Feld zwischen einer ersten Elektrodenfläche (3) und einer zweiten Elektrodenfläche (4) erzeugt wird, die jeweils um einen axialen Bereich von dem durch ersten und zweiten Radius begrenzten Querschnitt (9) des Behandlungsraums beabstandet sind, wobei ein Isolator (2, 2') und das stabförmige Element (5) in diesem axialen Bereich einen Querschnitt aufspannen, der sich von einer Elektrodenfläche (3, 4) zum Behandlungsraum verjüngt und wobei die Elektrodenflächen (3, 4) von Elektroden gebildet sind, die Durchbrechungen (22) aufweisen und sich über einen größeren Querschnitt erstrecken als der Behandlungsraum.

8. Verfahren nach Anspruch 7, **dadurch gekennzeichnet, dass** der Behandlungsraum mit ringförmigem Querschnitt (9) durch einen Rohrabschnitt (1) gebildet wird, der eine innere Oberfläche in einem ersten Radius um eine Längsachse aufweist, und das stabförmige Element (5) eine Oberfläche in einem zweiten Radius um die Längsmittelachse aufweist.

## Claims

1. Device for the treatment of a pumpable medium (8) by means of a high voltage pulse, having a treatment chamber with a cross-section (9) that has a first radius about its central longitudinal axis, a first electrode surface (3) and a second electrode surface (4) which is axially spaced from the first electrode surface (3), wherein in the axial spacing between the first electrode surface (3) and the second electrode surface (4) an insulator (2, 2') is arranged and the first and second electrode surfaces (3, 4) can be subjected with electrical energy of opposite polarity, wherein in the treatment chamber a rod-shaped element (5) is arranged, limiting the cross-section (9) by its second radius, **characterized in that** the first electrode surface (3) and the second electrode surface (4) are spaced by an axial zone from the treatment chamber which has a cross-section 9 delimited by the first and second radius, wherein the insulator (2, 2') and the rod-shaped element (5), which is an insulator, in this axial zone open up a cross-section, which tapers from one electrode surface (3, 4) to the treatment chamber, and wherein the electrode surfaces (3, 4) are formed by electrodes having openings (22) and extend over a larger cross-section than the treatment chamber.

2. Device according to claim 1, **characterized in that** the first electrode surface (3, 11) and the second electrode surface (4, 12) are each circumferentially closed about the longitudinal central axis.

3. Device according to claim 1, characterizes in that the first electrode surface (3, 11) and the second electrode surface (4, 12) are arranged in the same first radius about the central longitudinal axis.

4. Device according to one of the claims 1 to 3, **characterized in that** the first and/or the second electrode surface (3, 4) are contacted by a conductor which is arranged through the wall of the tube section (1).

5. Device according to one of the preceding claims, **characterized in that** the first radius changes in sections along the longitudinal central axis.

6. Device according to one of the preceding claims, **characterized in that** the second radius changes in sections along the longitudinal central axis.

7. Process for the high voltage pulse treatment of pumpable media by moving a medium along the longitudinal axis of a treatment chamber, by generating an electric field between a first electrode surface (3) and a second electrode surface (4) axially spaced from the first electrode surface (3), wherein the treatment chamber is limited to a ring-shaped cross-section (9) by a rod-shaped element (5), **characterized in that** the electric field is generated between a first electrode surface (3) and a second electrode surface (4), which are each spaced by an axial zone from the cross-section (9) of the treatment chamber delimited by the first and the second radius, wherein an insulator (2, 2') and the rod-shaped element (5) in this axial zone open up a cross-section which tapers from one electrode surface (3, 4) to the treatment chamber, and wherein the electrode surfaces (3, 4) are formed by electrodes which have openings (22) and which extend over a larger cross-section than the treatment chamber.

8. Process according to claim 7, **characterized in that** the treatment chamber having a ring-shaped cross-section (9) is formed by a tube section (1) having an inner surface in a first radius about a longitudinal axis, and the rod-shaped element (5) has a surface in a second radius about the longitudinal central axis.

## Revendications

1. Dispositif de traitement d'un fluide de pompage (8) utilisant une impulsion haute tension, et présentant une chambre de traitement de section transversale (9) pourvue d'un premier rayon autour d'un axe longitudinal médian, une première face d'électrode (3) et une seconde face d'électrode (4), qui est espacée axialement de la première face d'électrode (3), tandis qu'un isolateur (2,2') est disposé dans l'espace axial entre la première face d'électrode (3) et la seconde face d'électrode (4), la première et la seconde faces d'électrode (3,4) pouvant être sousmises à une énergie électrique de polarité opposée, tandis que la chambre de traitement comprend un élément en forme de barre (5), qui délimite la section transversale (9) par son second rayon, **caractérisé en ce que** la première face d'électrode (3) et la seconde face d'électrode (4) sont respectivement espacées, par une zone axiale, de la chambre de traitement présentant une section transversale (9) délimitée par le premier et le second rayons, où l'isolateur (2,2') et l'élément en forme de barre (5), qui constitue un isolateur, définissent dans cette zone axiale une section transversale allant rétrécissant d'une face d'électrode (3,4) vers la chambre de traitement et où les faces d'électrode (3,4) sont constituées d'électrodes présentant des ajours (22) et s'étendant sur une plus grande section transversale que la chambre de traitement.

2. Dispositif selon la revendication 1, **caractérisé en ce que** la première face d'électrode (3,11) et la seconde face d'électrode (4,12) sont respectivement fermées tout autour de l'axe médian longitudinal.

3. Dispositif selon la revendication 1, **caractérisé en ce que** la première face d'électrode (3,11) et la seconde face d'électrode (4,12) sont agencées autour de l'axe médian longitudinal dans le même premier rayon.

4. Dispositif selon l'une des revendications 1 à 3, **caractérisé en ce que** la première et/ou la seconde face d'électrode (3,4) est au contact d'un câble qui traverse la paroi de la section tubulaire (1).

5. Dispositif selon l'une des revendications précédentes, **caractérisé en ce que** le premier rayon est modifié par sections le long de l'axe médian longitudinal.

6. Dispositif selon l'une des revendications précédentes, **caractérisé en ce que** le second rayon est modifié par sections au-dessus de l'axe médian longitudinal.

7. Dispositif de traitement par impulsions haute tension de fluides de pompage consistant à faire circuler un fluide le long de l'axe longitudinal d'une chambre de traitement, à produire un champ électrique entre une première face d'électrode (3) et une seconde face d'électrode (4) espacée axialement de la première face d'électrode (3), où la chambre de traitement est délimitée par un élément en forme de barre (5) pour constituer une section transversale annulaire (9), **caractérisé en ce que** le champ électrique est produit entre une première face d'électrode (3) et une seconde face d'électrode (4) qui sont respectivement espacées, par une zone axiale, de la section transversale (9) de la chambre de traitement, section délimitée par le premier et le second rayons, où un isolateur (2,2') et l'élément en forme de barre (5) définissent dans cette zone axiale une section transversale allant rétrécissant d'une face d'électrode (3,4) vers la chambre de traitement et où les faces d'électrode (3,4) sont constituées d'électrodes, présentant des ajours (22) et s'étendant sur une plus grande section transversale que la chambre de traitement.

8. Procédé selon la revendication 7, **caractérisé en ce que** la chambre de traitement de section transversale annulaire (9) est constituée d'une section tubulaire (1), présentant une surface interne dans un premier rayon autour d'un axe longitudinal et que l'élément en forme de barre (5) comporte une surface dans un second rayon autour de l'axe médian longitudinal.
